# EUROPÄISCHE PATENTANMELDUNG

(11) **EP 1 000 789 A2**
(43) Veröffentlichungstag der Anmeldung: **17.05.2000**
(21) Anmeldenummer: 99121225.9
(22) Anmeldetag: 23.10.1999
(51) Int. Cl.: B60K 6/00

(54) **Antrieb für ein Kraftfahrzeug**

(30) Priorität: 10.11.1998 DE 19851671
(71) Anmelder: ROBERT BOSCH GMBH, 70442 Stuttgart (DE)
(72) Erfinder: Hiller, Burkhard, 71739 Oberriexingen (DE); Ries-Mueller, Klaus, 74906 Bad Rappenau (DE)

(57) **Zusammenfassung**

Die Erfindung betrifft einen Antrieb für ein Kraftfahrzeug mit einer Verbrennungskraftmaschine (12) und einem auf die Antriebsräder des Kraftfahrzeuges einwirkenden Getriebe (14), wobei eine Getriebeeingangswelle (16) mit einer Abtriebswelle (15) der Verbrennungskraftmaschine (12) kuppelbar ist, und mit einer an das Getriebe (14) kuppelbaren elektrischen Maschine (20), die als Startermotor zum Andrehen der Verbrennungskraftmaschine (12) verwendet werden kann und in der Drehrichtung umschaltbar ist.

Es ist vorgesehen, daß über eine Meß- und Steuerelektronik (22) eine Fahrgeschwindigkeit (30) und eine Fahrtrichtungsanforderung (32) an das Kraftfahrzeug erfaßbar ist und daß beim Unterschreiten einer vorgebbaren Fahrgeschwindigkeit (30) und bei einer Fahrtrichtungsanforderung (32) "rückwärts" eine Kraftübertragung von der Verbrennungskraftmaschine (12) zu dem Getriebe (14) nicht mehr stattfindet und ein Antrieb des Kraftfahrzeuges von der elektrischen Maschine (20) übernommen wird.

## Beschreibung

Die Erfindung betrifft einen Antrieb für ein Kraftfahrzeug mit den im Oberbegriff des Patentanspruchs 1 genannten Merkmalen.

### Stand der Technik

Es ist bekannt, Kraftfahrzeuge mit einer Verbrennungskraftmaschine und einem auf die Antriebsräder des Kraftfahrzeuges einwirkenden Getriebe sowie einer elektrischen Maschine auszustatten. Eine solche elektrische Maschine dient unter anderem als ein Startermotor zum Andrehen der Verbrennungskraftmaschine und als ein Generator zur Versorgung eines Bordnetzes des Kraftfahrzeuges.

Es ist weiterhin bekannt, die elektrischen Maschinen derart auszugestalten, daß sie in bestimmten Betriebszuständen des Antriebes als Antriebsaggregat genutzt werden können. Beispielhaft für eine solche elektrische Maschine sei hier genannt das System KSG (Kurbelwellen-Starter-Generator). Allen diesen Systemen gemeinsam ist, daß die Elektromaschine mit einer Getriebeeingangswelle gekuppelt ist und auf diese eine Kraft überträgt. Die Kraftübertragung kann dabei beispielsweise während eines Beschleunigungsmanövers (Booster-Funktion) oder nach der Abschaltung der Verbrennungskraftmaschine erfolgen. In letzterem Fall wird mittels einer Steuerung innerhalb einer vorgebbaren Drehzahl der Verbrennungsmotor abgeschaltet und der Antrieb erfolgt ausschließlich über die elektrische Maschine. Nachteilig hierbei ist, daß eine Kraftübertragung bisher ausschließlich zum Antrieb in eine Fahrtrichtung "vorwärts" genutzt wird, das heißt, daß die Drehrichtung der Kraftübertragung von der elektrischen Maschine auf die Getriebeeingangswelle bisher immer mit der Drehrichtung der Verbrennungskraftmaschine bei der Kraftübertragung auf das Getriebe übereinstimmte. Bei einer Fahrtrichtungsanforderung "rückwärts" wird mittels eines zusätzlichen Ganges des Getriebes eine entsprechende Kraftübertragung auf die Antriebsräder des Kraftfahrzeuges gewährleistet.

### Vorteile der Erfindung

Der erfindungsgemäße Antrieb eines Kraftfahrzeuges mit den im Anspruch 1 genannten Merkmalen ermöglicht es, während einer Fahrtrichtungsanforderung "rückwärts" die elektrische Maschine als Antriebsaggregat zu nutzen. Die Kraftübertragung auf die Getriebeeingangswelle erfolgt dabei in entgegengesetzter Drehrichtung zur Kraftübertragung der Verbrennungskraftmaschine. Auf diese Weise entfällt der Rückwärtsgang des Getriebes, was wiederum zu einer erheblichen Kostenreduktion bei der Herstellung eines solchen Getriebes führt.

Ausgehend von der Verbrennungskraftmaschine mit einer Abtriebswelle wird über eine Kupplung die Kraft auf die Getriebeeingangswelle übertragen und nachfolgend auf das Getriebe, das zum Antrieb der Räder des Kraftfahrzeuges dient. Die elektrische Maschine kann dabei der Abtriebswelle oder der Getriebeeingangswelle zugeordnet sein. Zusätzlich kann ein Zwischengetriebe zwischen Abtriebs- beziehungsweise Getriebeeingangswelle und elektrischer Maschine angeordnet sein.

Dem Antrieb ist eine Meß- und Steuerelektronik zugeordnet. Bei dieser Elektronik kann bei einer Fahrtrichtungsanforderung "rückwärts" und bei dem Vorliegen eines günstigen Betriebsbereichs der Verbrennungskraftmaschine die elektrische Maschine derart geschaltet werden, daß die Drehrichtung der Kraftübertragung auf das Getriebe umgekehrt wird. Gleichzeitig wird die Kraftübertragung durch die Verbrennungskraftmaschine unterbrochen und zwar entweder durch eine Abschaltung oder durch eine Entkupplung von der Getriebeeingangswelle. Hierdurch wird sichergestellt, daß ein Kraftfluß von der Verbrennungskraftmaschine zum Getriebe nicht mehr erfolgt.

Weitere bevorzugte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: eine Prinzipdarstellung eines Antriebs eines Kraftfahrzeuges in einer ersten Variante;
- Figur 2: eine Prinzipdarstellung eines Antriebs eines Kraftfahrzeuges in einer zweiten Variante und
- Figur 3: ein Blockschaltbild zur Steuerung eines Antriebs mittels einer elektrischen Maschine.

### Beschreibung der Ausführungsbeispiele

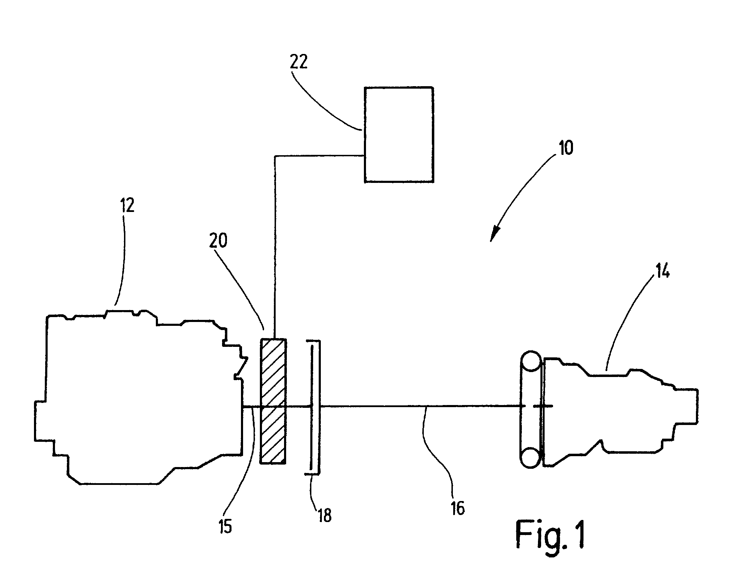

Figur 1 zeigt eine erste mögliche Variante eines Antriebes 10 eines Kraftfahrzeuges in einer schematischen Prinzipskizze.

Der Antrieb 10 umfaßt eine Verbrennungskraftmaschine 12 und ein Getriebe 14. Das Getriebe 14 ist über eine Getriebeeingangswelle 16 und eine Kupplung 18 mit einer Abtriebswelle 15 der Verbrennungskraftmaschine 12 verbunden und über eine hier nicht dargestellte Getriebeausgangswelle mit Antriebsrädern des Kraftfahrzeuges wirkverbunden.

Während des Betriebes der Verbrennungskraftmaschine 12 wird eine Kraft auf die Abtriebswelle 15 übertragen und zwar derart, daß die Abtriebswelle 15 in einer bestimmten Drehrichtung rotiert. Wird durch einen Fahrer des Kraftfahrzeuges eine Fahrtrichtungsanforderung "rückwärts" gewünscht, so muß das Getriebe 14 derart ausgelegt sein, daß es die gegebene Drehrichtung der Welle nachfolgend auf der Getriebeausgangswelle umkehrt und damit das Rückwärts fahren ermöglicht. Zu diesem Zweck weist das Getriebe 14 in den bisher bekannten Anordnungen einen Rückwärtsgang auf. Die Erfindung ermöglicht es, diesen Gang einzusparen und führt damit zu einer Gewichts- und Herstellungskostenreduktion des Getriebes 14.

Der Antrieb 10 umfaßt ferner eine elektrische Maschine 20, die mit der Abtriebswelle 15 wirkverbunden ist. Die elektrische Maschine 20 wird über eine Meß- und Steuerelektronik 22 gesteuert und dient neben der erfindungsgemäßen Verwendung unter anderem als ein Startermotor zum Andrehen der Verbrennungskraftmaschine 12 und als ein Generator zur Versorgung eines Bordnetzes des Kraftfahrzeuges. Weiterhin ist die elektrische Maschine 20 derart ausgestaltet, daß eine Kraft auf die Abtriebswelle 15 übertragen werden kann.

Bei dem Unterschreiten einer vorgebbaren Fahrzeuggeschwindigkeit 30 wird über die Meß- und Steuerelektronik 22 der Verbrennungsmotor 12 abgeschaltet und der Antrieb kann über die elektrische Maschine 20 erfolgen. Befindet sich das Kraftfahrzeug im Stillstand und wird gleichzeitig die Fahrtrichtungsanforderung 32 "rückwärts" eingestellt, so erfolgt die Kraftübertragung von der elektrischen Maschine 20 auf die Abtriebswelle 15 in einer entgegengesetzten Drehrichtung. Auf diese Weise wird die Getriebeeingangswelle 16, die mit der Abtriebswelle 15 über die Kupplung 18 verbunden ist, ebenfalls in entgegengesetzter Richtung gedreht, das heißt, in dem Getriebe 14 werden die Elemente, die ein Reversieren der Drehrichtung der Getriebeausgangswelle ermöglichen, nicht mehr benötigt (Rückwärtsgang). Besitzt der Verbrennungsmotor eine elektrisch oder hydraulisch frei zu betätigende Ventilsteuerung oder Nockenwelle, so sollten die Ventile vorzugsweise geschlossen sein, um die Reibungsverluste des Verbrennungsmotors gering zu halten.

Weiterhin ist es vorteilhaft, die Ventile aus Komfortgründen so anzusteuern, daß sich geringe Kompressionsmomente ergeben.

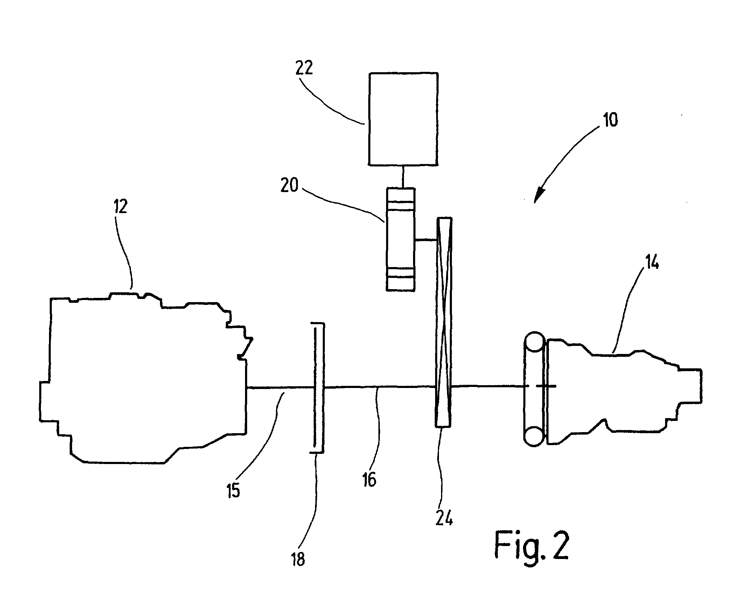

Die Figur 2 zeigt eine weitere Variante des Antriebes 10. Gleiche Teile wie in Figur 1 sind mit gleichen Bezugszeichen versehen. Die elektrische Maschine 20 ist hier über ein Zwischengetriebe 24 mit der Getriebeeingangswelle 16 wirkverbunden. Ein solches Zwischengetriebe 24 kann auch in der in Figur 1 gezeigten Ausgestaltung der Erfindung zwischen der Abtriebswelle 15 und der elektrischen Maschine 20 geschaltet sein. Ebenso kann die elektrische Maschine 20 direkt an der Getriebeeingangswelle 16 angeordnet sein.

In dem gezeigten Ausführungsbeispiel der Figur 2 erfolgt die Kraftübertragung vom Verbrennungskraftmotor 12 auf das Getriebe 14 in bereits erläuterter Weise. Beim Unterschreiten einer vorgebbaren Fahrzeuggeschwindigkeit 30 kann über die Meß- und Steuerelektronik 22 die Verbrennungskraftmaschine 12 abgeschaltet werden. Bei einer Fahrtrichtungsanforderung "rückwärts" erfolgt über die elektrische Maschine 20 eine Kraftübertragung auf die Getriebeeingangswelle 16 mit entgegengesetzter Drehrichtung analog dem Prinzip der Figur 1. Weiterhin ist es bei der Anordnung nach Figur 2 möglich, auf die Abschaltung des Verbrennungsmotors 12 zu verzichten und die Kraftübertragung des Verbrennungsmotors 12 mittels der Kupplung 18 zu unterbrechen. In einem solchen Fall muß von der Meß- und Steuerelektronik 22 einerseits der Stillstand des Kraftfahrzeuges und andererseits die Fahrtrichtungsanforderung erfaßt und entsprechend ausgewertet werden. Ein solcher optionaler Betrieb ermöglicht es, flexibel auf gegebene Anforderungen zu reagieren. So kann beispielsweise bei großer Kälte die Abschaltung der Verbrennungskraftmaschine 12 unterbunden werden.

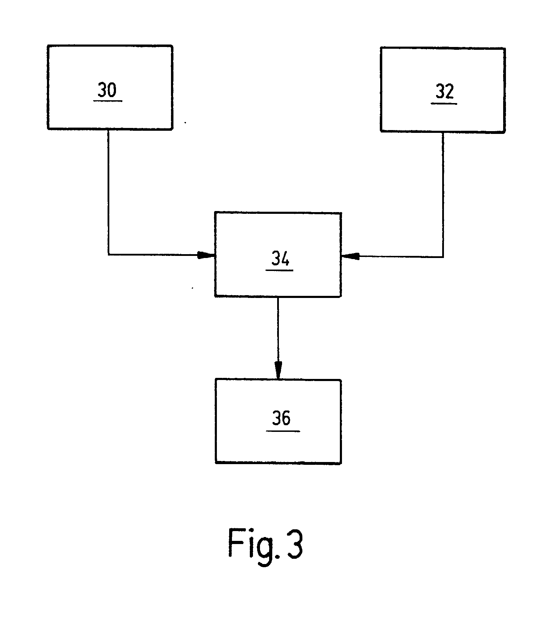

In Figur 3 ist in schematischer Weise der Ablauf der Steuerung des Rückwärtsfahrens dargestellt. Zunächst wird von der Meßelektronik 22 eine Fahrzeuggeschwindigkeit 30 erfaßt. Unterhalb einer vorgebbaren Geschwindigkeit 30 wird die Kraftübertragung von der Verbrennungskraftmaschine 12 zu dem Getriebe 14 unterbrochen, und der Antrieb des Kraftfahrzeuges wird von der elektrischen Maschine 20 übernommen. Die Unterbrechung der Kraftübertragung kann einerseits durch die Abschaltung der Verbrennungskraftmaschine 12 erfolgen oder über die Entkopplung der Kupplung 18 ermöglicht werden. Ist nun gleichzeitig die Fahrtrichtungsanforderung 32 auf "rückwärts" gestellt, so ergibt sich ein Betriebsmodus 34, bei dem die Kraftübertragung der elektrischen Maschine 20 auf die Getriebeeingangswelle 16 mit entgegengesetzter Drehrichtung erfolgt. Die Drehzahl der elektrischen Maschine 20 kann dabei beispielsweise in Abhängigkeit von einer Fahrpedalstellung beeinflußt werden. Insgesamt ergibt sich somit eine Fahrtrichtung 36 (rückwärts).

Die Erfindung zeichnet sich durch eine hohe Variabilität bezüglich der Betriebsparameter und der Anordnung der einzelnen Elemente des Antriebes 10 aus. Durch das Reversieren der Drehrichtung der Getriebeeingangswelle 16 entfällt der Rückwärtsgang des Getriebes 16.

## Patentansprüche

1. Antrieb für ein Kraftfahrzeug mit einer Verbrennungskraftmaschine (12) und einem auf die Antriebsräder des Kraftfahrzeuges einwirkenden Getriebe (14), wobei eine Getriebeeingangswelle (16) mit einer Abtriebswelle (15) der Verbrennungskraftmaschine (12) kuppelbar ist, und mit einer an das Getriebe (14) kuppelbaren elektrischen Maschine (20), die als Startermotor zum Andrehen der Verbrennungskraftmaschine (12) verwendet werden kann und in der Drehrichtung umschaltbar ist, **dadurch gekennzeichnet**, daß über eine Meß- und Steuerelektronik (22) eine Fahrgeschwindigkeit (30) und eine Fahrtrichtungsanforderung (32) an das Kraftfahrzeug erfaßbar ist und daß beim Unterschreiten einer vorgebbaren Fahrgeschwindigkeit (30) und bei einer Fahrtrichtungsanforderung (32) "rückwärts" eine Kraftübertragung von der Verbrennungskraftmaschine (12) zu dem Getriebe (14) nicht mehr stattfindet und ein Antrieb des Kraftfahrzeuges von der elektrischen Maschine (20) übernommen wird.

2. Antrieb nach Anspruch 1, **dadurch gekennzeichnet**, daß die elektrische Maschine (20) mit der Abtriebswelle (15) wirkverbunden ist.

3. Antrieb nach Anspruch 1, **dadurch gekennzeichnet**, daß die elektrische Maschine (20) mit der Getriebeeingangswelle (16) wirkverbunden ist.

4. Antrieb nach einem der vorhergehenden Ansprüche, **dadurch gekennzeichnet**, daß zwischen die elektrische Maschine (20) und die Getriebeeingangswelle (16) oder die Abtriebswelle (15) ein Zwischengetriebe (24) geschaltet ist.

5. Antrieb nach einem der vorhergehenden Ansprüche, **dadurch gekennzeichnet**, daß beim Unterschreiten der vorgebbaren Fahrzeuggeschwindigkeit (30) die Verbrennungskraftmaschine (12) abgeschaltet wird.

6. Antrieb nach einem der vorhergehenden Ansprüche, **dadurch gekennzeichnet**, daß bei der Fahrtrichtungsaufforderung (32) "rückwärts" eine Drehrichtung der Kraftübertragung von der elektrischen Maschine (20) auf die Getriebeeingangswelle (16) umgekehrt wird.

7. Antrieb nach Anspruch 3, **dadurch gekennzeichnet**, daß beim Unterschreiten der vorgebbaren Fahrzeuggeschwindigkeit (30) und bei der Fahrtrichtungsaufforderung (32) "rückwärts" die Kraftübertragung von der Verbrennungskraftmaschine (12) zum Getriebe (14) über eine Kupplung (18) unterbrochen wird.

8. Antrieb nach Anspruch 2, **dadurch gekennzeichnet**, daß die Nockenwellen der Verbrennungskraftmaschine so angesteuert werden, daß sich eine möglichst geringe Verlustleistung und/oder geringe Kompressionsmonente durch das Mitdrehen des Verbrennungsmotors erbeben.
